# EUROPEAN PATENT SPECIFICATION

(11) **EP 3 904 139 B1**
(45) Date of publication and mention of the grant of the patent: **12.04.2023**
(21) Application number: 19904246.6
(22) Date of filing: 27.12.2019
(51) Int. Cl.: B60K 11/00, B60K 11/02, B60K 1/00, H01M 10/44, H01M 10/48

(54) **VEHICLE COOLING CONTROL METHOD AND SYSTEM**
VERFAHREN UND SYSTEM ZUR STEUERUNG DER FAHRZEUGKÜHLUNG
PROCÉDÉ ET SYSTÈME DE COMMANDE DE REFROIDISSEMENT DE VÉHICULE

(30) Priority: 28.12.2018 CN 201811628966
(43) Date of publication of application: 03.11.2021
(73) Proprietor: Great Wall Motor Company Limited, Baoding, Hebei 071000 (CN)
(72) Inventor: LIU, Zhenhui, Baoding, Hebei 071000 (CN); LIU, Yuling, Baoding, Hebei 071000 (CN); LI, Lei, Baoding, Hebei 071000 (CN)
(74) Representative: Klunker IP Patentanwälte PartG mbB
(86) International application number: PCT/CN2019/129276
(87) International publication number: WO 2020/135736

(56) References cited:
- CN-A- 101 016 029
- CN-U- 208 035 941
- US-A1- 2010 239 894

## Description

### FIELD

The present invention relates to the field of vehicle cooling technology, and in particular to a vehicle cooling control method and system.

### BACKGROUND

After a vehicle has been working (for example, traveling) for a time period and stopped working (for example, a high-voltage of an electric vehicle is powered off), heat-generating components such as a motor or an engine of the vehicle stop working, but the heat of the motor cannot be dissipated in time, which causes the hidden danger of overheating of the heat-generating components.

For this reason, it has been proposed in the current related technology that after the entire vehicle stops working, a battery (or a rechargeable battery) mounted on the vehicle is used to continue to drive a cooling system to cool the heat-generating components. This process is referred to as post-cooling operation process herein, which is used to control and reduce temperature of the heat-generating components.

However, the inventor of the present invention has found out that at present, the vehicle either has no post-operation processing and controls the cooling system to stop working immediately after the high-voltage is cut off, or performs the post-operation processing for a time period immediately after the high-voltage is cut off and then shuts down the cooling system. Therefore, under certain operating conditions, for example, when the vehicle is suddenly powered off during high-speed traveling, the heat-generating component may continue to heat up before the vehicle speed drops and the vehicle may enter the post-cooling operation stage, and the post-cooling operation stage may end prematurely, thus the heat-generating component of the vehicle cannot be protected by good thermal management.

CN208035941U discloses a vehicle heat dissipation control method, comprising the following steps:
- when a vehicle is moving forward and the speed is greater than a first speed threshold value - a bidirectional fan is in a stop mode;
- when the vehicle is moving forward and the speed is less than or equal to the first speed threshold value - the bidirectional fan is in an air drawing-in mode;
- when the vehicle is moving backward and the speed is greater than a second speed threshold value, the bidirectional fan is in the stop mode; and
- when the vehicle is moving backward and the speed is less than or equal to the second speed threshold value, the bidirectional fan is in the air draw-in mode.

### SUMMARY

In view of this, the present invention aims to provide a vehicle cooling control method, so as to at least solve the problem of insufficient cooling caused by a sudden power off when the vehicle is running and enters the post-cooling operation stage before the vehicle speed drops.

In order to achieve the above objects, the technical solution is achieved by the vehicle cooling control method as defined by the independent claim 1. Potential further embodiments of the vehicle cooling control method form the subject-matter of the dependent claims 1-5.

Compared with the conventional technology, the vehicle cooling control method of the present invention has the following advantages:
the vehicle cooling control method according to the present invention detects whether the vehicle satisfies the condition for entering the post-cooling operation by further considering the traveling speed (not just considering the high-voltage state of the entire vehicle), so that when the traveling speed is high, the high-voltage battery pack of the vehicle is directly controlled to drive the cooling device of the vehicle to operate and dissipate heat, and the vehicle is controlled not to enter the post-cooling operation. For example, the cooling components may be controlled to execute according to the previous strategy, and the cooling components are not turned off and the vehicle does not enter a post-thermal management operation. In some vehicle operating conditions, when the vehicle is running at a high speed and suddenly loses power, the traveling speed threshold is caused by the high traveling speed, so that the vehicle does not turn off the cooling component or enter the post-thermal management operation, but waits to regain the power to further execute the previous high-voltage drive cooling strategy, which avoids switching back and forth between different cooling strategies and saves the resource consumption of the controller. Alternatively, when the vehicle is running at a high speed and suddenly loses power, the detecting whether the vehicle satisfies the condition for entering the post-cooling operation, and the post-cooling operation may be executed until the traveling speed of the vehicle drops below the traveling speed threshold, which optimizes the cooling effect of the post-cooling operation of the vehicle.

Another object of the present invention is to provide a vehicle cooling control system so as to at least solve the problem of insufficient cooling caused by a sudden power off when the vehicle is running and enters the post-cooling operation stage before the vehicle speed drops.

In order to achieve the above objects, the technical solution is achieved by the vehicle cooling control system as defined by the independent claim 6. Potential further embodiments of the vehicle cooling control system form the subject-matter of the dependent claims 7-10

The vehicle cooling control system has the same advantages as the foregoing vehicle cooling control method as compared with the prior art, and will not be repeated here.

Other features and advantages of the present invention will be described in detail in the following specific embodiments.

### BRIEF DESCRIPTION OF THE DRAWINGS

The drawings are used to provide a further understanding of the present invention, and the exemplary embodiments and the description is used to explain the present invention, and do not constitute an improper limitation of the present invention, which is limited only by the scope of protection defined by the appended claims. In the drawings:
FIG. 1 is a flowchart of a vehicle cooling control method according to an embodiment of the present application;
FIG. 2 is a flowchart of the vehicle cooling control method according to another embodiment of the present application; and
FIG. 3 is a structural block diagram of a vehicle cooling control system according to an embodiment of the present application.

Reference numerals are as follows:

| | |
|---|---|
| 30 vehicle cooling control system; | 301 traveling speed detection unit; |
| 302 high-voltage cooling drive unit; | 303 post-cooling operation detection unit; |
| 304 low-voltage cooling drive unit. | |

### DETAILED DESCRIPTION OF THE EMBODIMENTS

It should be noted that the embodiments of the present invention and the features of the embodiments may be combined with each other if there is no conflict.

In addition, a battery mentioned in the embodiments of the present invention Z application refers to a rechargeable battery. A post-cooling operation process mentioned in the embodiments of the present invention refers to a process in which the rechargeable battery mounted on the vehicle is used to further drive a cooling mechanism of the entire vehicle to cool a heat-generating component after the entire vehicle stops working.

Hereinafter, the present invention will be described in detail with reference to the drawings and in combination with the embodiments.

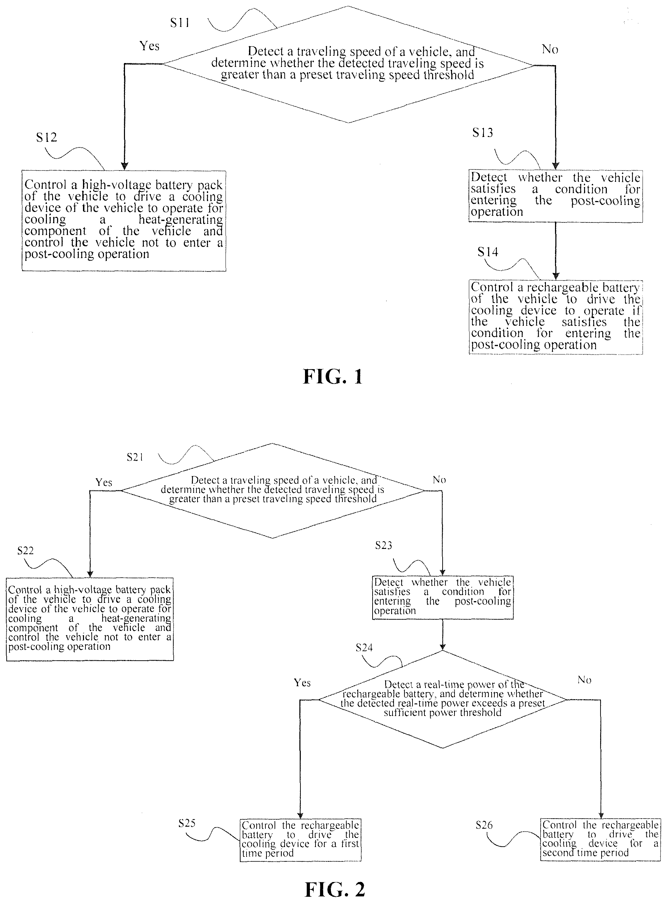

As shown in FIG. 1, a vehicle cooling control method according to an embodiment of the present invention includes:

S11, a traveling speed of a vehicle is detected, and whether the detected traveling speed is greater than a preset traveling speed threshold is determined.

The executive body for the method of the embodiment of the present invention may be processors or controllers of various types, and it may be realized by additionally mounting a processor on the vehicle. In addition, the method may also be realized by improving the hardware or software configuration of a controller, such as a VCU (Vehicle Control Unit), which is originally equipped in the vehicle. All these embodiments fall within the protection scope of the present invention. The traveling speed threshold may be any preset value, such as 0km/h, 5km/h, and so on.

S12, a high-voltage battery pack of the vehicle is controlled to drive a cooling device of the vehicle to operate for cooling a heat-generating component of the vehicle and the vehicle is controlled not to enter a post-cooling operation if the detected traveling speed is greater than or equal to the preset traveling speed threshold.

It should be noted that the type of the heat-generating component of the vehicle should not be limited here, which may be any component capable of generating heat in the vehicle. For example, the heat-generating component may be a motor, a DC/DC (direct current/direct current converter), a cooling pipe circuit, an IGBT (Insulated Gate Bipolar Transistor), a motor controller, an engine, and so on in a new energy vehicle.

S13, whether the vehicle satisfies a condition for entering the post-cooling operation is detected if the detected traveling speed is less than the traveling speed threshold.

S14, a rechargeable battery of the vehicle is controlled to drive the cooling device to operate if the vehicle satisfies the condition for entering the post-cooling operation.

It can be understood that the type of the cooling device may be various cooling components or their combinations for realizing the cooling function, such as a water pump, an oil cooler, an electronic fan, etc., and all of them fall within the protection scope of the preset invention.

In the current related technology, the vehicle immediately enters the detection and processing of the condition of the post-cooling operation after the vehicle is powered off, so that under some special operating conditions that the vehicle runs at a high speed and loses power due to failure, the vehicle may immediately enter the detection and processing of the post-cooling operation. However, the vehicle may return to the high-voltage power-on state due to user operation or automatic reset. At this time, the vehicle may switch back to the cooling strategy of using a high-voltage drive cooling component. Switching back and forth may cause the resource consumption of the controller. In addition, the vehicle executes the post-cooling operation during the high-speed traveling stage, which may cause poor cooling effect.

In contrast, in this embodiment, whether the vehicle satisfies the condition for entering the post-cooling operation is detected by considering the traveling speed (not just considering the high-voltage state of the entire vehicle), so that when the traveling speed is high, the high-voltage battery pack of the vehicle is directly controlled to drive the cooling device of the vehicle to operate and dissipate heat, and the vehicle is controlled not to enter the post-cooling operation. For example, the cooling components may be controlled to execute according to the previous strategy, and the cooling components are not turned off and the vehicle does not enter a post-thermal management. For example, when the vehicle is running at a high speed and suddenly loses power, the traveling speed threshold is caused by the high traveling speed, so that the vehicle does not turn off the cooling component or enter the post-thermal management operation, but waits to regain the power to further execute the previous high-voltage drive cooling strategy, which avoids switching back and forth between different cooling strategies and saves the resource consumption of the controller. Alternatively, when the vehicle is running at a high speed and suddenly loses power, the detecting whether the vehicle satisfies the condition for entering the post-cooling operation, and the post-cooling operation may be executed until the traveling speed of the vehicle drops below the traveling speed threshold, which ensures the cooling effect of the post-cooling operation of the vehicle..

In some embodiments, whether the vehicle satisfies the condition for entering the post-cooling operation may be detected by the following method: whether the vehicle is in a high-voltage state is detected if the detected traveling speed is less than the traveling speed threshold; a temperature of the heat-generating component is detected if the vehicle is not in the high-voltage state; and it is determined that the vehicle satisfies the condition for entering the post-cooling operation if the detected temperature of the heat-generating component is greater than a preset temperature threshold. Therefore, only when the traveling speed is low, the detection and processing of the condition of the post-cooling operation is triggered, and the detection and determination of the condition of the post-cooling operation are realized by detecting the high-voltage state of the entire vehicle and the temperature of the heat-generating component.

In some embodiment, multiple heat-generating components are provided, and each of the heat-generating components is configured with a corresponding temperature threshold. Correspondingly, whether the vehicle satisfies the condition for entering the post-cooling operation is detected by the following method: it is determined that the vehicle satisfies the condition for entering the post-cooling operation if a real-time temperature of any one of the multiple heat-generating components exceeds the temperature threshold corresponding to the detected heat-generating component. For example, the motor is configured with a motor temperature threshold, the DC/DC converter is configured with a corresponding DC/DC temperature threshold, etc., which may be preset according to the heat resistance characteristics of the heat-generating component, and should be limited here. As a result, the safe thermal management of the cooling components of the vehicle is able to be ensured.

In the embodiments of the present invention, in view of the disadvantages and imperfection of the current post-thermal management operation strategy in the related technology, the conditions for entering and exiting the post-thermal management operation are provided according to the embodiments of the present invention, and the time of entering the post-operation is determined according to a BMS state, a vehicle speed, and a coolant temperature. Besides, the time of exiting the post-operation is determined according to the operation time of the post operation, a voltage value of the small rechargeable battery and the coolant temperature. The specific strategy may include: if the VCU detects that the BMS does not exit the high-voltage state, or the BMS exits the high-voltage state but the vehicle speed is greater than 5km/h (standard amount), the VCU controls the fan and the water pump to execute according to the previous strategy, and does not turn off the fan and the water pump, and the vehicle does not enter the post-thermal management operation.

In addition, the fan and the water pump may be directly turned off without entering the post-operation when all of the following conditions are satisfied:
1) the BMS exits the high-voltage state:
2) the vehicle speed is less than or equal to 5km/h; and
3) the coolant temperature is less than 55 degrees Celsius (standard amount).

In addition, the post-thermal management operation may be started when all of the following conditions are satisfied:
1) the BMS exits the high-voltage state;
2) the vehicle speed is less than or equal to 5km/h (standard amount); and
3) the coolant temperature is greater than 55 degrees Celsius (standard amount).

In addition, the fan and the water pump may be controlled to operate when the conditions of the post-thermal management operation are satisfied.

The vehicle exits the post-thermal management operation when any of the following conditions is satisfied:
1) the coolant temperature is less than 46 degrees Celsius (standard amount);
2) the operation time of the post operation reaches 30s (standard amount);
3) the voltage of the small rechargeable battery is lower than 11.5V (standard amount) and lasts for 1s (standard amount); and
4) the high-voltage is resupplied.

In the embodiments of the present invention, when the condition for exiting the post-thermal management operation is satisfied, the fan and the water pump are controlled to be turned off, or the fan and the water pump are controlled to be turned on again (specifically, the high-voltage is resupplied). Specifically, the protection of the heat-generating component under extreme operating condition is able to be realized by defining the condition for maintaining the original thermal management strategy and the condition for entering the post-thermal management operation.

Further, due to the use of the rechargeable battery during the post-cooling operation process, the rechargeable battery has the risk of excessive power consumption or even exhaustion, so that the next time the user expects to start the vehicle, the vehicle cannot be started because the rechargeable battery cannot provide suitable power; and, the excessive use of the rechargeable battery may also adversely affect the serve life of the rechargeable battery.

In view of this, as shown in FIG. 2. a vehicle cooling control method according to an embodiment of the present invention includes:
S21, a traveling speed of a vehicle is detected, and whether the detected traveling speed is greater than a preset traveling speed threshold is determined.

S22, a high-voltage battery pack of the vehicle is controlled to drive the cooling device of the vehicle to operate for cooling the heat-generating component of the vehicle and the vehicle is controlled not to enter the post-cooling operation if the detected traveling speed is greater than or equal to the preset traveling speed threshold.

S23, whether the vehicle satisfies the condition for entering the post-cooling operation is detected if the detected traveling speed is less than the traveling speed threshold.

S24, a real-time power of the rechargeable battery is detected and whether the detected real-time power exceeds the sufficient power threshold is determined, if the vehicle satisfies the condition for entering the post-cooling operation.

The detection of the real-time power of the rechargeable battery may be realized by directly detecting the power information (for example, how much power is left) of the rechargeable battery. As an additional or alternative, since the voltage and current output by the rechargeable battery may decrease with the duration of the discharge time during the operation of the rechargeable battery, the voltage value and/or current value at two terminals of the rechargeable battery may be detected, and the detected voltage value and/or current value are/is used to indicate (or reflect) the real-time power of the rechargeable battery, so that the detection process is more convenient and reliable. As an example, in a rechargeable battery with a rated voltage of 12V, its working voltage may decay between 12V and 9V within the duration of the discharge.

S25, the rechargeable battery is controlled to drive the cooling device for a first time period if the real-time power exceeds the sufficient power threshold.

S26, the rechargeable battery is controlled to drive the cooling device for a second time period if the real-time power does not exceed the sufficient power threshold. The first time period is longer than the second time period.

It should be noted that, the sufficient power threshold may be pre-set by the user, for example, it may be the power required to ensure the normal start of the vehicle. Therefore, when the power of the rechargeable battery is sufficient, the rechargeable battery is controlled to supply power to the cooling device for a long time to dissipate a large amount of heat, and when the power of the rechargeable battery is insufficient, the rechargeable battery is controlled to supply power to the cooling device for a short time to dissipate a small amount of heat. On one hand, the cooling operation of the heat-generating component during the post-cooling operation is realized, and on the other hand, the power of the rechargeable battery is ensured not to be excessively consumed during the post-cooling operation, the service life of the rechargeable battery is ensured, and the power of the rechargeable battery is ensured to be sufficient to complete the subsequent start of the vehicle, which improves the user experience of the vehicle.

In the embodiments of the present invention, in order to better control and manage the power of the rechargeable battery, a stepped power supply is proposed when the power supply of the rechargeable battery is triggered, so as to extend the endurance of the rechargeable battery as much as possible while achieving the performance of the post-cooling operation. Moreover, by defining a maximum operating time of the post-operation, the rechargeable battery can be prevented from deteriorating due to the temperature drop failure. In addition, by defining the condition for exiting the post-thermal management operation due to low power storage, the rechargeable battery can be prevented from deteriorating.

More preferably, the cooling device of the vehicle includes a combination of various cooling components (such as an electronic water pump and an electric fan), which may also be used to further improve the endurance of the rechargeable battery through the strategic scheduling in a state of sufficient power or insufficient power of the rechargeable battery. As an example, the cooling device includes the electronic water pump and the electric fan, and the electronic water pump and the electric fan operate to dissipate heat when they are powered by the rechargeable battery. For example, the movement of the coolant in the cooling circuit is realized by operating the electronic water pump, and the fan is used to blow the cooling pipe to dissipate heat. The rechargeable battery is controlled to supply power for the electronic water pump and the electronic fan for the first time period if the real-time power exceeds the sufficient power threshold, and the rechargeable battery is controlled to supply power for the electronic water pump and the electronic fan for the second time period if the real-time power does not exceed the sufficient power threshold. As a result, multiple cooling components such as the electronic water pump and the electronic fan are turned on at the same time when the power of the rechargeable battery is sufficient, and the electronic water pump or the electronic fan is turned on separately when the power of the rechargeable battery is insufficient, which realizes the balance control between the cooling and the battery life.

The cooling principle of the electronic water pump and the electronic fan is as follows. The electronic water pump and the electronic fan are the core components of the thermal management system of a new energy vehicle, the electronic water pump provides power for the coolant to circulate in a water circuit, and the electronic fan generates air flow by rotating to take way surface heat of a radiator. The coolant circulates in the system to take away the heat of the heat-generating components such as the motor, and the heat is taken away by the fan at the radiator, so as to achieve the cooling effect. When the entire vehicle is powered by high-voltage power, high-voltage components such as the motor and the motor controller send temperature values, and the electronic water pump and the electronic fan perform corresponding operation levels according to the temperature values. The lower the temperature is, the lower the operation level is; and the higher the temperature is, the higher the operation level is.

In order to prevent the excessive consumption of the small battery during the post operation processing of the electronic water pump and the electronic fan, or take into account the balance relationship between the post processing cooling request and the discharge capacity of the small battery, to effectively prevent the excessive consumption of the 12V small battery during the post-operation of the electronic water pump and the electronic fan, to reduce the risk of the entire vehicle not being able to start normally due to the loss of the 12V small battery, and to protect the life of the 12V small battery, conditions for the electronic water pump and the electronic fan to enter the post-operation processing include: a current voltage value of the small battery is collected, and is input from a bottom layer of the VCU to an application layer of the VCU; and a current motor rotor temperature value T_{MOTOR}, a current controller IGBT temperature value T_{IGBT}, and a current coolant temperature T_{WATER} are sent to the VCU by a MCU (Motor Control Unit) bus; and a current DC/DC temperature value T_{DCDC} is sent to the VCU by a DC/DC bus; and the VCU determines whether the new energy vehicle is in a high-voltage power-on state.

The temperature control thresholds are required to be preset or pre-calibrated, which specifically include: motor rotor temperature thresholds T_{MOTOR1} and T_{MOTOR2}, controller IGBT temperature thresholds T_{IGBT1} and T_{IGBT2}, coolant temperature thresholds T_{WATER1} and T_{WATER2}, and DC/DC temperature thresholds T_{DCDC1} and T_{DCDC2}.

Further, the voltage control threshold of the small battery may be preset: for example, two different voltage control thresholds of the small battery may be set to A and B, and A<B. Then, the set values T₁ and T₂ of different turn-on time periods during the process of the post-cooling operation of the water pump are set, and T₁<T₂.

After the above presetting are completed, the process of the post-cooling operation may be performed by executing the following method:
the vehicle state changes from high-voltage power-on state to high-voltage power-off state, the water pump enters the post-processing operation, and when the entire vehicle is in the high-voltage power-off state, the water pump immediately enters the post-processing operation state, so that the heat is taken away in time, which prevents overheating of parts, avoids malfunction and shortening of service life caused by the overheating of the parts, and ensures the normal traveling of the vehicle.

When the water pump enters the post-operation processing, the real-time motor rotor temperature T_{MOTOR}, the controller IGBT temperature value T_{IGBT}, the coolant temperature T_{WATER}, and the DC/DC converter temperature T_{DCDC} are collected in real time. If T_{MOTOR}> T_{MOTOR2}, or T_{IGBT}>T_{IGBT2}, or T_{WATER}>T_{WATER1,} or T_{DCDC}> T_{DCDC2}, that is, if any temperature value is greater than an opening threshold, the water pump is turned on. If T_{MOTOR}< T_{MOTOR2}, and T_{IGBT}<T_{IGBT2}, and T_{WATER}<T_{WATER2}, and T_{DCDC}< T_{DCDC2}, that is, if all the temperature values are less than the closing thresholds, the water pump is controlled to be turned off. The opening and closing thresholds of the post-processing operation are set according to the temperature tolerance of the dissipated object, which can effectively prevent overheating.

Preferably, when the water pump enters the post-operation processing, if the voltage value of the small battery is greater than or equal to B, the water pumped is allowed to be turned on for the time period T₂. If the voltage value of the small battery is greater than A and less than B, the water pump is allowed to be turned on for the time period T₁. If voltage value of the small battery is less than or equal to A, the water pump is not allowed to be turned on. The purpose of setting the voltage thresholds A and B is to determine the remaining discharge capacity of the small battery in more detail according to the voltage values of the small battery, and determine that the time of the post-operation processing should be T₁ or T₂ according to the discharge capacity.

In the embodiments of the present invention, the components are able to be better cooled by defining the conditions for keeping the original strategy and entering the post-thermal management operation, which prevents the components from being burned out. In addition, the power loss of the rechargeable battery due to the post-operation may be avoided by defining the conditions for exiting the post-operation.

In the embodiment of the present invention, two groups of different time periods T₁ and T₂ of the post processing operation are set to take into account of the balance relationship between the post-processing cooling request and the discharge capacity of the small battery as much as possible, which ensures the cooling capacity of the post-operation and the discharge capacity of the small battery. On one hand, when the vehicle state changes from the high-voltage power-on state to the high-voltage power-off state, the water pump performs the post-processing operation according to the input temperature, which effectively protects the dissipated components such as the motor and the motor controller from overheating. On the other hand, when the water pump enters the post-processing operation, with reference to the voltage value of the small battery and according to the set voltage thresholds, the operation time of the post processing operation is controlled, and whether to exit the post processing operation is controlled, which effectively prevents the excessive consumption of the small battery during the post-processing operation, protects the life of the small battery, and prevents the vehicle form being unable to start when the vehicle is started next time.

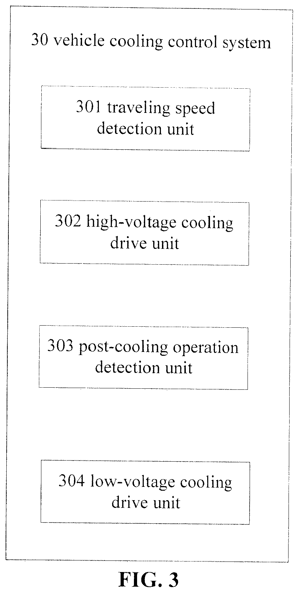

As shown in FIG. 3, a vehicle cooling control system 30 according to an embodiment of the present application includes: a traveling speed detection unit 301, configured to detect a traveling speed of the vehicle and determine whether the detected traveling speed is greater than a preset traveling speed threshold; a high-voltage cooling drive unit 302, configured to control a high-voltage battery pack of the vehicle to drive the cooling device of the vehicle to operate for cooling the heat-generating component of the vehicle and control the vehicle not to enter the post-cooling operation if the detected traveling speed is greater than or equal to the preset traveling speed threshold; a post-cooling operation detection unit 303, configured to detect whether the vehicle satisfies a condition for entering the post-cooling operation if the detected traveling speed is less than the traveling speed threshold; and a low-voltage cooling drive unit 304, configured to control the rechargeable battery of the vehicle to drive the cooling device to operate if the vehicle satisfies the condition for entering the post-cooling operation.

In some embodiments, the post-cooling operation detection unit 303 includes: a high-voltage detection unit, configured to detect whether the vehicle is in a high-voltage state if the detected traveling speed is less than the traveling speed threshold; a heat-generating detection unit, configured to detect a temperature of the heat-generating component if the vehicle is not in the high-voltage state; and a post-operation detection unit, configured to determine that the vehicle satisfies the condition for entering the post-cooling operation if the detected temperature of the heat-generating component is greater than a preset temperature threshold.

In some embodiments, multiple heat-generating components are provided, and each of the heat-generating components is configured with a corresponding temperature threshold. The post-operation detection unit is configured to determine that the vehicle satisfies the condition for entering the post-cooling operation if a real-time temperature of any one of the multiple heat-generating components exceeds the temperature threshold corresponding to the detected heat-generating component.

In some embodiments, the low-voltage cooling drive unit 304 includes: a rechargeable battery power detection unit, configured to detect a real-time power of the rechargeable battery, and determine whether the detected real-time power exceeds a preset sufficient power threshold if the vehicle satisfies the condition for entering the post-cooling operation; a rechargeable battery driving period control module, configured to control the rechargeable battery to drive the cooling device for a first time period if the real-time power exceeds the sufficient power threshold, and control the rechargeable battery to drive the cooling device for a second time period if the real-time power does not exceed the sufficient power threshold. The first time period is longer than the second time period.

In some embodiments, the cooling device includes an electronic water pump and an electronic fan, and the electronic water pump and the electronic fan are able to be driven by the rechargeable battery to operate and dissipate heat. The rechargeable battery driving period control module is further configured to control the rechargeable battery to supply power to the electronic water pump and the electronic fan for the first time period if the real-time power exceeds the sufficient power threshold, and control the rechargeable battery to supply power to the electronic water pump and the electronic fan for the second time period if the real-time power does not exceed the sufficient power threshold.

More details of the vehicle cooling control system according to the embodiments of the present invention may refer to the related description in the above vehicle cooling control method, and the same or corresponding technical effects as the above vehicle cooling control method can be achieved, which will not be repeated here.

A computer readable storage medium having instructions stored thereon is provided according to the embodiments of the present invention, and the instructions are used to cause a machine to execute the above vehicle cooling control method.

A processor configured to run a program is provided according to the embodiments of the present invention, and the processor is used to realize the vehicle cooling control method while the program is running.

The invention is defined by the subject-matter of the independent claims. Potential further embodiments and aspects of the invention form the subject-matter of the dependent claims. Those skilled in the art should understand that various modifications of the invention are possible, but only within the scope of the invention as defined by the appended claims.

## Claims

1. A vehicle cooling control method, comprising:
detecting a traveling speed of a vehicle, and determining whether the detected traveling speed is greater than a preset traveling speed threshold;
controlling a high-voltage battery pack of the vehicle to drive a cooling device of the vehicle to operate for cooling a heat-generating component of the vehicle and controlling the vehicle not to enter a post-cooling operation if the detected traveling speed is greater than or equal to the preset traveling speed threshold;
detecting whether the vehicle satisfies a condition for entering the post-cooling operation if the detected traveling speed is less than the traveling speed threshold; and
controlling a rechargeable battery of the vehicle to drive the cooling device to operate if the vehicle satisfies the condition for entering the post-cooling operation.

2. The vehicle cooling control method according to claim 1, wherein the detecting whether the vehicle satisfies the condition for entering the post-cooling operation if the detected traveling speed is less than the traveling speed threshold comprises:
detecting whether the vehicle is in a high-voltage state if the detected traveling speed is less than the traveling speed threshold;
detecting a temperature of the heat-generating component if the vehicle is not in the high-voltage state; and
determining that the vehicle satisfies the condition for entering the post-cooling operation if the detected temperature of the heat-generating component is greater than a preset temperature threshold.

3. The vehicle cooling control method according to claim 2, wherein a plurality of heat-generating components are provided, and each of the heat-generating components is configured with a corresponding temperature threshold, wherein the determining that the vehicle satisfies the condition for entering the post-cooling operation if the detected temperature of the heat-generating component is greater than the preset temperature threshold comprises:
determining that the vehicle satisfies the condition for entering the post-cooling operation if a real-time temperature of any one of the plurality of heat-generating components exceeds the temperature threshold corresponding to the detected heat-generating component.

4. The vehicle cooling control method according to claim 1, wherein the controlling the rechargeable battery of the vehicle to drive the cooling device to operate if the vehicle satisfies the condition for entering the post-cooling operation comprises:
detecting a real-time power of the rechargeable battery, and determining whether the detected real-time power exceeds a preset sufficient power threshold if the vehicle satisfies the condition for entering the post-cooling operation;
controlling the rechargeable battery to drive the cooling device for a first time period if the real-time power exceeds the sufficient power threshold; and
controlling the rechargeable battery to drive the cooling device for a second time period if the real-time power does not exceed the sufficient power threshold, wherein the first time period is longer than the second time period.

5. The vehicle cooling control method according to claim 4, wherein the cooling device comprises an electronic water pump and an electronic fan, and the electronic water pump and the electronic fan are able to be driven by the rechargeable battery to operate and dissipate heat, wherein after determining whether the detected real-time power exceeds the preset sufficient power threshold, the vehicle cooling control method comprises:
controlling the rechargeable battery to supply power to the electronic water pump and the electronic fan for the first time period if the real-time power exceeds the sufficient power threshold; and
controlling the rechargeable battery to supply power to the electronic water pump and the electronic fan for the second time period if the real-time power does not exceed the sufficient power threshold.

6. A vehicle cooling control system, comprising:
a traveling speed detection unit, configured to detect a traveling speed of the vehicle and determine whether the detected traveling speed is greater than a preset traveling speed threshold;
a high-voltage cooling drive unit, configured to control a high-voltage battery pack of the vehicle to drive a cooling device of the vehicle to operate for cooling a heat-generating component of the vehicle and control the vehicle not to enter a post-cooling operation if the detected traveling speed is greater than or equal to the preset traveling speed threshold;
a post-cooling operation detection unit, configured to detect whether the vehicle satisfies a condition for entering the post-cooling operation if the detected traveling speed is less than the traveling speed threshold; and
a low-voltage cooling drive unit, configured to control a rechargeable battery of the vehicle to drive the cooling device to operate if the vehicle satisfies the condition for entering the post-cooling operation.

7. The vehicle cooling control system according to claim 6, wherein the post-cooling operation detection unit comprises:
a high-voltage detection unit, configured to detect whether the vehicle is in a high-voltage state if the detected traveling speed is less than the traveling speed threshold;
a heat-generating detection unit, configured to detect a temperature of the heat-generating component if the vehicle is not in the high-voltage state; and
a post-operation detection unit, configured to determine that the vehicle satisfies the condition for entering the post-cooling operation if the detected temperature of the heat-generating component is greater than a preset temperature threshold.

8. The vehicle cooling control system according to claim 7, wherein a plurality of heat-generating components are provided, and each of the heat-generating components is configured with a corresponding temperature threshold, wherein the post-operation detection unit is configured to determine that the vehicle satisfies the condition for entering the post-cooling operation if a real-time temperature of any one of the plurality of heat-generating components exceeds the temperature threshold corresponding to the detected heat-generating component.

9. The vehicle cooling control system according to claim 6, wherein the low-voltage cooling drive unit comprises:
a rechargeable battery power detection unit, configured to detect a real-time power of the rechargeable battery and determine whether the detected real-time power exceeds a preset sufficient power threshold if the vehicle satisfies the condition for entering the post-cooling operation; and
a rechargeable battery driving period control module, configured to control the rechargeable battery to drive the cooling device for a first time period if the real-time power exceeds the sufficient power threshold and control the rechargeable battery to drive the cooling device for a second time period if the real-time power does not exceed the sufficient power threshold, wherein the first time period is longer than the second time period.

10. The vehicle cooling control system according to claim 9, wherein the cooling device comprises an electronic water pump and an electronic fan, and the electronic water pump and the electronic fan are able to be driven by the rechargeable battery to operate and dissipate heat, wherein the rechargeable battery driving period control module is further configured to control the rechargeable battery to supply power to the electronic water pump and the electronic fan for the first time period if the real-time power exceeds the sufficient power threshold, and control the rechargeable battery to supply power to the electronic water pump and the electronic fan for the second time period if the real-time power does not exceed the sufficient power threshold.

11. A machine readable storage medium having instructions stored on the machine readable storage medium for causing a machine to execute the vehicle cooling control method according to any one of claims 1 to 5.

12. A processor, configured to run a program, wherein the program is configured to execute the vehicle cooling control method according to any one of claims 1 to 5 when the program is run.

## Patentansprüche

1. Verfahren zur Steuerung der Fahrzeugkühlung, umfassend:
Erfassen einer Fahrgeschwindigkeit eines Fahrzeugs und Bestimmen, ob die erfasste Fahrgeschwindigkeit größer ist als ein voreingestellter Schwellenwert für die Fahrgeschwindigkeit;
Steuern eines Hochspannungsbatteriepacks des Fahrzeugs, um eine Kühlvorrichtung des Fahrzeugs so zu betreiben, dass sie eine wärmeerzeugende Komponente des Fahrzeugs kühlt, und Steuern des Fahrzeugs, nicht in einen Nachkühlbetrieb einzutreten, wenn die erfasste Fahrgeschwindigkeit größer oder gleich dem voreingestellten Fahrgeschwindigkeitsschwellenwert ist;
Erfassen, ob das Fahrzeug eine Bedingung für den Eintritt in den Nachkühlbetrieb erfüllt, wenn die erfasste Fahrgeschwindigkeit kleiner als der Fahrgeschwindigkeitsschwellenwert ist; und
Steuern einer wiederaufladbaren Batterie des Fahrzeugs, um die Kühlvorrichtung in Betrieb zu setzen, wenn das Fahrzeug die Bedingung für den Eintritt in den Nachkühlbetrieb erfüllt.

2. Fahrzeugkühlungs-Steuerverfahren nach Anspruch 1, wobei das Erfassen, ob das Fahrzeug die Bedingung für den Eintritt in den Nachkühlungsbetrieb erfüllt, wenn die erfasste Fahrgeschwindigkeit kleiner als der Fahrgeschwindigkeits-Schwellenwert ist, umfasst:
Erfassen, ob sich das Fahrzeug in einem Hochspannungszustand befindet, wenn die erfasste Fahrgeschwindigkeit unter dem Fahrgeschwindigkeitsschwellenwert liegt;
Erfassen einer Temperatur der wärmeerzeugenden Komponente, wenn sich das Fahrzeug nicht in dem Hochspannungszustand befindet, und
Bestimmen, dass das Fahrzeug die Bedingung für den Eintritt in den Nachkühlbetrieb erfüllt, wenn die erfasste Temperatur des wärmeerzeugenden Bauteils größer als ein voreingestellter Temperaturschwellenwert ist.

3. Fahrzeugkühlungs-Steuerverfahren nach Anspruch 2, wobei mehrere wärmeerzeugende Komponenten vorgesehen sind und jede der wärmeerzeugenden Komponenten mit einem entsprechenden Temperaturschwellenwert konfiguriert ist, wobei das Bestimmen, dass das Fahrzeug die Bedingung für den Eintritt in den Nachkühlungsbetrieb erfüllt, wenn die erfasste Temperatur der wärmeerzeugenden Komponente größer als der voreingestellte Temperaturschwellenwert ist, umfasst:
Feststellen, dass das Fahrzeug die Bedingung für den Eintritt in den Nachkühlbetrieb erfüllt, wenn eine Echtzeit-Temperatur einer beliebigen der mehreren wärmeerzeugenden Komponenten den Temperaturschwellenwert überschreitet, der der erfassten wärmeerzeugenden Komponente entspricht.

4. Fahrzeugkühlungs-Steuerungsverfahren nach Anspruch 1, wobei das Steuern der wiederaufladbaren Batterie des Fahrzeugs zum Betreiben der Kühlvorrichtung, wenn das Fahrzeug die Bedingung für den Eintritt in den Nachkühlungsbetrieb erfüllt, umfasst:
Erfassen einer Echtzeitleistung der wiederaufladbaren Batterie und Bestimmen, ob die erfasste Echtzeitleistung einen voreingestellten Schwellenwert für ausreichende Leistung überschreitet, wenn das Fahrzeug die Bedingung für den Eintritt in den Nachkühlbetrieb erfüllt;
Steuern der wiederaufladbaren Batterie, um die Kühlvorrichtung für eine erste Zeitperiode zu betreiben, wenn die Echtzeitleistung den Schwellenwert für ausreichende Leistung überschreitet; und
Steuern der wiederaufladbaren Batterie, um die Kühlvorrichtung für eine zweite Zeitspanne zu betreiben, wenn die Echtzeitleistung den Schwellenwert für ausreichende Leistung nicht überschreitet, wobei die erste Zeitspanne länger ist als die zweite Zeitspanne.

5. Fahrzeugkühlungs-Steuerverfahren nach Anspruch 4, wobei die Kühlvorrichtung eine elektronische Wasserpumpe und einen elektronischen Lüfter umfasst und die elektronische Wasserpumpe und der elektronische Lüfter von der wiederaufladbaren Batterie angetrieben werden können, um zu arbeiten und Wärme abzuleiten, wobei das Fahrzeugkühlungs-Steuerverfahren nach der Bestimmung, ob die erfasste Echtzeitleistung den voreingestellten Schwellenwert für ausreichende Leistung überschreitet, Folgendes umfasst
Steuern der wiederaufladbaren Batterie, um die elektronische Wasserpumpe und das elektronische Gebläse für die erste Zeitperiode mit Strom zu versorgen, wenn die Echtzeitleistung den Schwellenwert für ausreichende Leistung überschreitet; und
Steuern der wiederaufladbaren Batterie, um der elektronischen Wasserpumpe und dem elektronischen Gebläse für die zweite Zeitperiode Energie zuzuführen, wenn die Echtzeitleistung den Schwellenwert für ausreichende Leistung nicht überschreitet.

6. Fahrzeugkühlungs-Steuersystem, umfassend:
eine Fahrgeschwindigkeitserfassungseinheit, die so konfiguriert ist, dass sie eine Fahrgeschwindigkeit des Fahrzeugs erfasst und feststellt, ob die erfasste Fahrgeschwindigkeit größer als ein voreingestellter Fahrgeschwindigkeitsschwellenwert ist;
eine Hochspannungs-Kühlungs-Antriebseinheit, die so konfiguriert ist, dass sie ein Hochspannungs-Batteriepaket des Fahrzeugs steuert, um eine Kühlvorrichtung des Fahrzeugs so anzusteuern, dass sie zum Kühlen einer wärmeerzeugenden Komponente des Fahrzeugs arbeitet, und das Fahrzeug so steuert, dass es nicht in einen Nachkühlungsbetrieb eintritt, wenn die erfasste Fahrgeschwindigkeit größer oder gleich dem voreingestellten Fahrgeschwindigkeits-Schwellenwert ist;
eine Nachkühlbetriebs-Erfassungseinheit, die so konfiguriert ist, dass sie erfasst, ob das Fahrzeug eine Bedingung für den Eintritt in den Nachkühlbetrieb erfüllt, wenn die erfasste Fahrgeschwindigkeit kleiner als der Fahrgeschwindigkeits-Schwellenwert ist; und
eine Niederspannungs-Kühlungsantriebseinheit, die so konfiguriert ist, dass sie eine wiederaufladbare Batterie des Fahrzeugs steuert, um die Kühlvorrichtung in Betrieb zu nehmen, wenn das Fahrzeug die Bedingung für den Eintritt in den Nachkühlungsbetrieb erfüllt.

7. Fahrzeugkühlungs-Steuersystem nach Anspruch 6, wobei die Nachkühlungs-Betriebserkennungseinheit umfasst:
eine Hochspannungserfassungseinheit, die so konfiguriert ist, dass sie erfasst, ob sich das Fahrzeug in einem Hochspannungszustand befindet, wenn die erfasste Fahrgeschwindigkeit unter dem Schwellenwert für die Fahrgeschwindigkeit liegt;
eine Wärmeerzeugungs-Erfassungseinheit, die so konfiguriert ist, dass sie eine Temperatur der wärmeerzeugenden Komponente erfasst, wenn sich das Fahrzeug nicht in dem Hochspannungszustand befindet; und
eine Nachbetriebs-Erfassungseinheit, die so konfiguriert ist, dass sie feststellt, dass das Fahrzeug die Bedingung für den Eintritt in den Nachkühlbetrieb erfüllt, wenn die erfasste Temperatur der wärmeerzeugenden Komponente größer als ein voreingestellter Temperaturschwellenwert ist.

8. Fahrzeugkühlungs-Steuersystem nach Anspruch 7, wobei mehrere wärmeerzeugende Komponenten vorgesehen sind und jede der wärmeerzeugenden Komponenten mit einem entsprechenden Temperaturschwellenwert konfiguriert ist, wobei die Nachbetriebs-Erfassungseinheit so konfiguriert ist, dass sie feststellt, dass das Fahrzeug die Bedingung für den Eintritt in den Nachkühlbetrieb erfüllt, wenn eine Echtzeit-Temperatur irgendeiner der mehreren wärmeerzeugenden Komponenten den der erfassten wärmeerzeugenden Komponente entsprechenden Temperaturschwellenwert überschreitet.

9. Fahrzeugkühlungs-Steuerungssystem nach Anspruch 6, wobei die Niederspannungs-Kühlungsantriebseinheit Folgendes umfasst:
eine Erfassungseinheit für die Leistung einer wiederaufladbaren Batterie, die so konfiguriert ist, dass sie eine Echtzeitleistung der wiederaufladbaren Batterie erfasst und feststellt, ob die erfasste Echtzeitleistung einen voreingestellten Schwellenwert für ausreichende Leistung überschreitet, wenn das Fahrzeug die Bedingung für den Eintritt in den Nachkühlbetrieb erfüllt; und
ein Antriebsperioden-Steuermodul für die wiederaufladbare Batterie, das so konfiguriert ist, dass es die wiederaufladbare Batterie so steuert, dass sie die Kühlvorrichtung für eine erste Zeitperiode antreibt, wenn die Echtzeitleistung den Schwellenwert für ausreichende Leistung übersteigt, und die wiederaufladbare Batterie so steuert, dass sie die Kühlvorrichtung für eine zweite Zeitperiode antreibt, wenn die Echtzeitleistung den Schwellenwert für ausreichende Leistung nicht übersteigt, wobei die erste Zeitperiode länger ist als die zweite Zeitperiode.

10. Fahrzeugkühlungssteuersystem nach Anspruch 9, wobei die Kühlvorrichtung eine elektronische Wasserpumpe und einen elektronischen Lüfter umfasst und die elektronische Wasserpumpe und der elektronische Lüfter von der wiederaufladbaren Batterie angetrieben werden können, um zu arbeiten und Wärme abzuleiten, wobei das Antriebsperioden-Steuermodul der wiederaufladbaren Batterie ferner so konfiguriert ist, dass es die wiederaufladbare Batterie so steuert, dass sie der elektronischen Wasserpumpe und dem elektronischen Lüfter für die erste Zeitperiode Strom zuführt, wenn die Echtzeitleistung den Schwellenwert für ausreichende Leistung überschreitet, und die wiederaufladbare Batterie so steuert, dass sie der elektronischen Wasserpumpe und dem elektronischen Lüfter für die zweite Zeitperiode Strom zuführt, wenn die Echtzeitleistung den Schwellenwert für ausreichende Leistung nicht überschreitet.

11. Maschinenlesbares Speichermedium mit auf dem maschinenlesbaren Speichermedium gespeicherten Befehlen, um eine Maschine zu veranlassen, das Fahrzeugkühlungs-steuerungsverfahren nach einem der Ansprüche 1 bis 5 auszuführen.

12. Ein Prozessor, der so konfiguriert ist, dass er ein Programm ausführt, wobei das Programm so konfiguriert ist, dass es das Fahrzeugkühlungs-Steuerverfahren nach einem der Ansprüche 1 bis 5 ausführt, wenn das Programm ausgeführt wird.

## Revendications

1. Procédé de commande de refroidissement de véhicule, comprenant :
la détection d'une vitesse de déplacement d'un véhicule, et la détermination de si oui ou non la vitesse de déplacement détectée est supérieure à un seuil de vitesse de déplacement prédéfini ;
la commande d'un bloc de batterie à tension élevée du véhicule pour piloter un dispositif de refroidissement du véhicule pour qu'il fonctionne pour refroidir un composant générateur de chaleur du véhicule et la commande du véhicule pour qu'il n'entre pas dans un fonctionnement de post-refroidissement si la vitesse de déplacement détectée est supérieure ou égale au seuil de vitesse de déplacement prédéfini ;
la détection de si oui ou non le véhicule satisfait une condition pour entrer dans le fonctionnement de post-refroidissement si la vitesse de déplacement détectée est inférieure au seuil de vitesse de déplacement prédéfini ; et
la commande d'une batterie rechargeable du véhicule pour piloter le dispositif de refroidissement pour qu'il fonctionne si le véhicule satisfait la condition pour entrer dans le fonctionnement de post-refroidissement.

2. Procédé de commande de refroidissement de véhicule selon la revendication 1, dans lequel la détection de si oui ou non le véhicule satisfait la condition pour entrer dans le fonctionnement de post-refroidissement si la vitesse de déplacement détectée est inférieure au seuil de vitesse de déplacement prédéfini comprend :
la détection de si oui ou non le véhicule est dans un état à tension élevée si la vitesse de déplacement détectée est inférieure au seuil de vitesse de déplacement prédéfini ;
la détection d'une température du composant générateur de chaleur si le véhicule n'est pas dans l'état à tension élevée ; et
la détermination du fait que le véhicule satisfait la condition pour entrer dans le fonctionnement de post-refroidissement si la température détectée du composant générateur de chaleur est supérieure à un seuil de température prédéfini.

3. Procédé de commande de refroidissement de véhicule selon la revendication 2, dans lequel les composants générateurs de chaleur d'une pluralité de composants générateurs de chaleur sont prévus, et chacun des composants générateurs de chaleur est configuré avec un seuil de température correspondant, dans lequel la détermination du fait que le véhicule satisfait la condition pour entrer dans le fonctionnement de post-refroidissement si la température détectée du composant générateur de chaleur est supérieure au seuil de température prédéfini comprend :
la détermination du fait que le véhicule satisfait la condition pour entrer dans le fonctionnement de post-refroidissement si une température en temps réel de l'un quelconque de la pluralité de composants générateurs de chaleur excède le seuil de température qui correspond au composant générateur de chaleur détecté.

4. Procédé de commande de refroidissement de véhicule selon la revendication 1, dans lequel la commande de la batterie rechargeable du véhicule pour piloter le dispositif de refroidissement pour qu'il fonctionne si le véhicule satisfait la condition pour entrer dans le fonctionnement de post- refroidissement comprend :
la détection d'une puissance en temps réel de la batterie rechargeable, et la détermination de si oui ou non la puissance en temps réel détectée excède un seuil de puissance suffisant prédéfini si le véhicule satisfait la condition pour entrer dans le fonctionnement de post-refroidissement ;
la commande de la batterie rechargeable pour piloter le dispositif de refroidissement pendant une première période temporelle si la puissance en temps réel excède le seuil de puissance suffisant prédéfini ; et
la commande de la batterie rechargeable pour piloter le dispositif de refroidissement pendant une seconde période temporelle si la puissance en temps réel n'excède pas le seuil de puissance suffisant prédéfini, dans lequel la première période temporelle est plus longue que la seconde période temporelle.

5. Procédé de commande de refroidissement de véhicule selon la revendication 4, dans lequel le dispositif de refroidissement comprend une pompe à eau électronique et un ventilateur électronique, et la pompe à eau électronique et le ventilateur électronique peuvent être pilotés par la batterie rechargeable pour qu'ils fonctionnent et dissipent la chaleur, dans lequel, après la détermination de si oui ou non la puissance en temps réel détectée excède le seuil de puissance suffisant prédéfini, le procédé de commande de refroidissement de véhicule comprend :
la commande de la batterie rechargeable pour alimenter en puissance la pompe à eau électronique et le ventilateur électronique pendant la première période temporelle si la puissance en temps réel excède le seuil de puissance suffisant prédéfini ; et
la commande de la batterie rechargeable pour alimenter en puissance la pompe à eau électronique et le ventilateur électronique pendant la seconde période temporelle si la puissance en temps réel n'excède pas le seuil de puissance suffisant prédéfini.

6. Système de commande de refroidissement de véhicule, comprenant :
une unité de détection de vitesse de déplacement, qui est configurée pour détecter une vitesse de déplacement du véhicule et pour déterminer si oui ou non la vitesse de déplacement détectée est supérieure à un seuil de vitesse de déplacement prédéfini ;
une unité de pilotage de refroidissement à tension élevée, qui est configurée pour commander un module de batterie à tension élevée du véhicule pour piloter un dispositif de refroidissement du véhicule pour qu'il fonctionne pour refroidir un composant générateur de chaleur du véhicule et pour commander le véhicule pour qu'il n'entre pas dans un fonctionnement de post-refroidissement si la vitesse de déplacement détectée est supérieure ou égale au seuil de vitesse de déplacement prédéfini ;
une unité de détection de fonctionnement de post-refroidissement, qui est configurée pour détecter si oui ou non le véhicule satisfait une condition pour entrer dans le fonctionnement de post-refroidissement si la vitesse de déplacement détectée est inférieure au seuil de vitesse de déplacement prédéfini ; et
une unité de pilotage de refroidissement à tension basse, qui est configurée pour commander une batterie rechargeable du véhicule pour piloter le dispositif de refroidissement pour qu'il fonctionne si le véhicule satisfait la condition pour entrer dans le fonctionnement de post- refroidissement.

7. Système de commande de refroidissement de véhicule selon la revendication 6, dans lequel l'unité de détection de fonctionnement de post-refroidissement comprend :
une unité de détection de tension élevée, qui est configurée pour détecter si oui ou non le véhicule est dans un état à tension élevée si la vitesse de déplacement détectée est inférieure au seuil de vitesse de déplacement prédéfini ;
une unité de détection de génération de chaleur, qui est configurée pour détecter une température du composant générateur de chaleur si le véhicule n'est pas dans l'état à tension élevée ; et
une unité de détection de post-fonctionnement, qui est configurée pour déterminer que le véhicule satisfait la condition pour entrer dans le fonctionnement de post-refroidissement si la température détectée du composant générateur de chaleur est supérieure à un seuil de température prédéfini,

8. Système de commande de refroidissement de véhicule selon la revendication 7, dans lequel les composants générateurs de chaleur d'une pluralité de composants générateurs de chaleur sont prévus, et chacun des composants générateurs de chaleur est configuré avec un seuil de température correspondant, dans lequel l'unité de détection de post-fonctionnement est configurée pour déterminer que le véhicule satisfait la condition pour entrer dans le fonctionnement de post-refroidissement si une température en temps réel de l'un quelconque de la pluralité de composants générateurs de chaleur excède le seuil de température qui correspond au composant générateur de chaleur détecté.

9. Système de commande de refroidissement de véhicule selon la revendication 6, dans lequel l'unité de pilotage de refroidissement à tension basse comprend :
une unité de détection de puissance de batterie rechargeable, qui est configurée pour détecter une puissance en temps réel de la batterie rechargeable et pour déterminer si oui ou non la puissance en temps réel détectée excède un seuil de puissance suffisant prédéfini si le véhicule satisfait la condition pour entrer dans le fonctionnement de post-refroidissement ; et
un module de commande de période de pilotage de batterie rechargeable, qui est configuré pour commander la batterie rechargeable pour piloter le dispositif de refroidissement pendant une première période temporelle si la puissance en temps réel excède le seuil de puissance suffisant prédéfini et pour commander la batterie rechargeable pour piloter le dispositif de refroidissement pendant une seconde période temporelle si la puissance en temps réel n'excède pas le seuil de puissance suffisant prédéfini, dans lequel la première période temporelle est plus longue que la seconde période temporelle.

10. Système de commande de refroidissement de véhicule selon la revendication 9, dans lequel le dispositif de refroidissement comprend une pompe à eau électronique et un ventilateur électronique, et la pompe à eau électronique et le ventilateur électronique peuvent être pilotés par la batterie rechargeable pour qu'ils fonctionnent et dissipent la chaleur, dans lequel le module de commande de période de pilotage de batterie rechargeable est en outre configuré pour commander la batterie rechargeable pour alimenter en puissance la pompe à eau électronique et le ventilateur électronique pendant la première période temporelle si la puissance en temps réel excède le seuil de puissance suffisant prédéfini, et pour commander la batterie rechargeable pour alimenter en puissance la pompe à eau électronique et le ventilateur électronique pendant la seconde période temporelle si la puissance en temps réel n'excède pas le seuil de puissance suffisant prédéfini.

11. Support de stockage pouvant être lu par une machine et comportant des instructions qui sont stockées sur le support de stockage pouvant être lu par une machine pour faire en sorte qu'une machine exécute le procédé de commande de refroidissement de véhicule selon l'une quelconque des revendications 1 à 5.

12. Processeur, configuré pour dérouler un programme, dans lequel le programme est configuré pour exécuter le procédé de commande de refroidissement de véhicule selon l'une quelconque des revendications 1 à 5 lorsque le programme est déroulé.
